Europäisches Patentamt

European Patent Office

Office européen des brevets

(19)

(11) Veröffentlichungsnummer: **0 306 789 B1**

## (12) EUROPÄISCHE PATENTSCHRIFT

(45) Veröffentlichungstag der Patentschrift: **11.12.91**

(51) Int. Cl.⁵: **B23K 7/00**

(21) Anmeldenummer: **88114025.5**

(22) Anmeldetag: **27.08.88**

(54) **Verfahren und Vorrichtung zum Längsteilen von Giesssträngen.**

(30) Priorität: **09.09.87 DE 3730150**

(43) Veröffentlichungstag der Anmeldung:
**15.03.89 Patentblatt 89/11**

(45) Bekanntmachung des Hinweises auf die
Patenterteilung:
**11.12.91 Patentblatt 91/50**

(84) Benannte Vertragsstaaten:
**AT BE ES FR GB IT LU NL SE**

(56) Entgegenhaltungen:
**EP-A- 0 225 481**
**DE-A- 3 532 010**

**PATENT ABSTRACTS OF JAPAN vol. 8, n 284**
**(M-348) (1721) 26. Dezember 1984, & JP -A -**
**59 153 572 (HITACHI ZOSEN KK) 01.09.1984**

**PATENT ABSTRACTS OF JAPAN vol. 8, n 177**
**(M-317) (1614) 15. August 1984, & JP - A - 59**
**70464 (SHIN NIPPON SEITETSU KK)**
**20.04.1984**

(73) Patentinhaber: **MESSER GRIESHEIM GMBH**
**Hanauer Landstrasse 330**
**W-6000 Frankfurt/Main(DE)**

(72) Erfinder: **Grohmann, Paul**
**Erlaufstrasse 23**
**A-2344 Maria-Enzersdorf(AT)**

## Beschreibung

Die Erfindung betrifft ein autogenes Brennschneidverfahren mit Sauerstoff zum Längsteilen von Gießsträngen nach dem Oberbegriff des Anspruches 1.

Eine wesentliche Voraussetzung für die Herstellung von Schnittflächen mit hoher Oberflächengüte und Maßhaltigkeit ist eine von Schlackenspritzern und Verunreinigungen saubere Schneiddüse. Bekanntlich muß beim Brennschneiden die Anschnittstelle auf Zündtemperatur erwärmt werden, damt die für den Schneidvorgang notwendige exotherme Reaktion erreicht wird. Hierzu ist beim autogenen Brennschneiden üblicherweise die Schneidsauerstoffbohrung mit einem Kranz von Heizflammen umgeben.

Das Anschneiden erfolgt normalerweise am ruhenden Werkstück von einer Werkstückkante aus. Hierbei wird der Schneidbrenner an die Kante gefahren und die Heizflammen wärmen die Kantenstelle auf Zündtemperatur an. Dieser Vorgang dauert je nach Werkstückdicke bis zu einigen Minuten. Ist die Zündtemperatur erreicht, wird der Schneidsauerstoff eingeschaltet und mit der Bewegung des Brenners begonnen.

Bei einer Acetylen-Sauerstoff-Flamme liegt die heißeste Stelle dicht vor der Spitze des hellleuchtenden Flammenkegels. Der Abstand der Schneiddüse von der Werkstückoberfläche soll daher möglichst nur so groß sein, daß die Kegelspitzen der Flammen fast aufsitzen, damit die Wärmeleistung voll ausgenutzt werden kann. Zu Beginn des Schneidvorganges wird der Brenner hochgefahren, um das Anhaften von Spritzern möglichst zu vermeiden.

Beim Längsteilen von aus Stranggießanlagen kontinuierlich austretenden Gießsträngen tritt das Problem auf, daß am Anfang des Gießstranges das Anlaufstück anliegt und daß sich das Werkstück bewegt. Es ist daher notwendig, den Schnitt mit dem sog. Lochstechverfahren zu beginnen. Hierbei wird die Schneiddüse mit ihren Heizflammen wie vorstehend beschrieben nahe über dem Gießstrang angeordnet und die Strangoberfläche auf Zündtemperatur erwärmt. Wenn diese Temperatur erreicht ist, wird das Schneidsauerstoffventil langsam bis auf den erforderlichen Maximaldruck geöffnet und dabei gleichzeitig der Brenner, je nach Blechdicke allmählich angehoben. Dabei bohrt sich der Schneidstrahl in das Blech ein und die Schlacke spritzt nach oben weg bis der Schneidstrahl an der Strangunterkante austritt.

Da für den beschriebenen Lochstechvorgang eine gewisse Zeit benötigt wird, kann die Schneiddüse nicht stationär angeordnet werden, sondern muß während des Lochstechens mit dem Strang mitbewegt werden. Dies bedeutet apparativen Aufwand für den Bewegungsvorgang und eine Verlängerung des Rollganges.

Darüber hinaus ist aus der EP-A2-0225481 ein Verfahren zum autogenen Brennschneiden mit Sauerstoff bekannt, bei dem der Sauerstoff in flüssiger Form auf einen hohen Druck gebracht und durch eine Flüssigstrahlschneiddüse der Schneidstelle zugeführt wird.

Ferner ist es zur Erzielung einer erhöhten Schneidgeschwindigkeit aus der DE-A1-3532010 bekannt, neben dem Schneidbrenner einen Vorheizbrenner anzuordnen, der ebenfalls synchron mit einem Strang bewegt wird.

Der Erfindung liegt daher die Aufgabe zugrunde, ein Verfahren zu schaffen, bei dem trotz stationärer Hochdruck-Flüssigstrahlschneiddüse das Lochstechen eines kontinuierlich bewegten Gießstranges möglich ist.

Diese Aufgabe wird erfindungsgemäß mit den im Anspruch 1 angegebenen Merkmalen gelöst.

Vorteilhafte Weiterbildungen der Erfindung sind in den Unteransprüchen angegeben.

Die Erfindung geht von dem Gedanken aus, daß die beiden Phasen des Lochstechens - Anwärmen der Stichstelle auf Zündtemperatur und Durchstechen sowie Schneidbeginn - örtlich und zeitlich getrennt werden.

Durch diese Aufteilung wird es möglich, die für das Lochstechen erforderliche Zeit in die vorhandene Bewegung des Gießstranges einzubauen. Eine Verlängerung des Rollganges entfällt. Die Bewegungseinrichtung für den Vorwärmbrenner, kann einfach gestaltet werden.

Überraschenderweise hat sich gezeigt, daß selbst bei dicken Werkstücken das Lochstechen derart schnell erfolgt, daß von einem fliegenden Schneidstart bei feststehender Hochdruck-Flüssigstrahlschneiddüse gesprochen werden kann.

Als Vorwärmbrenner werden vorteilhafter Weise ein oder mehrere Autogenbrenner oder Plasmabrenner eingesetzt. Besonders zweckmäßig, insbesondere bei höheren Gießgeschwindigkeiten ist, der Einsatz von Brennern mit in Reihe hintereinander angeordneten Heizflammen.

Die Synchronisation der Bewegung des Vorwärmbrenners mit der des Stranges kann, wie beim Querteilen bekannt, durch Anklemmen der Vorwärmbrennereinrichtung an den Strang erfolgen. Kurz vor Erreichen der Flüssigstrahlschneiddüse wird die Anklemmung gelöst und der Vorwärmbrenner bleibt vor der Schneiddüse stehen.

Die Erfindung ist aber nicht auf diese Art der Bewegungssynchronisation beschränkt. Die Erfindung ist besonders vorteilhaft anwendbar bei Bogenstranggießanlagen. Ein bevorzugtes Schneidmittel ist flüssiger Sauerstoff, der mit Drücken über 100 bar aus der Schneiddüse austritt.

Eine besondere Form der Hochdruck-Flüssigstrahlschneiddüse besteht in einem zentrischen Auslaß für den unter einem Druck von 100 bis 600 bar austretenden Flüssigsauerstoffstrahl. Eine solche Schneiddüse kann zum Lochstechen und zum Längsteilen verwendet werden. Zum Lochstechen kann die Schneiddüse nach einer Ausführung der Erfindung schwenkbar angeordnet werden. Eine andere vorteilhafte Ausführungsform besteht darin, während dem Lochstechen eine Relativbewegung zwischen der Schneiddüse und dem Strang zu erzeugen.

Die Strangoberflächen weisen oft eine Zunderschicht auf, welche die Schnittgeschwindigkeit reduziert. Um diesen Nachteil zu vermeiden, wird auf den zu schneidenden Bereich vor der Schnittstelle ein Entzunderungsbrenner gerichtet oder dieser Bereich abgeflämmt.

Der Vorwärmbrenner ist mit einer Regeleinrichtung für die Heizleistung ausgerüstet, um dem unterschiedlichen Wärmebedarf für Lochstechen und Schneiden Rechnung zu tragen.

## Patentansprüche

1. Autogenes Brennschneidverfahren mit Sauerstoff zum Längsteilen von Gießsträngen, insbesondere Brammen, mit einer Hochdruck-Flüssigstrahlschneiddüse, der ein Vorwärmbrenner zum Erhitzen der Werkstückoberfläche auf Zündtemperatur zugeordnet ist,
   dadurch gekennzeichnet,
   daß zum Lochstechen der gezündete Vorwärmbrenner synchron zum Gießstrang sowie gegen die Flüssigstrahlschneiddüse bewegt wird, und daß ferner das Lochstechen bei feststehender Flüssigstrahlschneiddüse erfolgt.

2. Verfahren nach Anspruch 1,
   dadurch gekennzeichnet,
   daß der Vorwärmbrenner ein Autogenbrenner ist.

3. Verfahren nach Anspruch 1,
   dadurch gekennzeichnet,
   daß der Vorwärmbrenner ein Plasmabrenner ist.

4. Verfahren nach Anspruch 2,
   dadurch gekennzeichnet,
   daß der Vorwärmbrenner in Reihe hintereinander angeordnete Heizflammen aufweist.

5. Verfahren nach einem der Ansprüche 1 bis 4,
   dadurch gekennzeichnet,
   daß der Vorwärmbrenner an den Gießstrang anklemmbar ist.

## Claims

1. Oxyacetylene cutting process for slitting casting strands, in particular slabs, using a high-pressure liquid-jet cutting nozzle to which is assigned a preheat torch for heating the surface of the workpiece to ignition temperature, characterised in that, for hole piercing, the ignited preheat torch is moved synchronously to the casting strand and towards the liquid-jet cutting nozzle, and in that, furthermore, the hole piercing is effected with a fixed liquid-jet cutting nozzle.

2. Process according to Claim 1, characterised in that the preheat torch is an oxyacetylene torch.

3. Process according to Claim 1, characterised in that the preheat torch is a plasma torch.

4. Process according to Claim 2, characterised in that the preheat torch has heating flames arranged in a line one after the other.

5. Process according to one of Claims 1 to 4, characterised in that the preheat torch can be clamped onto the casting strand.

## Revendications

1. Procédé d'oxycoupage autogène avec oxygène pour partager longitudinalement des boins, notamment des brames, avec une buse de coupe à jet liquide, à laquelle est associé un chalumeau de préchauffage pour échauffer la surface de la pièce d'oeuvre à la température d'allumage, procédé caractérisé en ce que pour le perçage du trou, le chalumeau de préchauffage allumé est déplacé en synchronisme par rapport au boin ainsi que vers la buse de coupe à jet liquide, et qu'en outre le perçage du trou s'effectue alors que la buse de coupe à jet liquide est fixe.

2. Procédé selon la revendication 1, caractérisé en ce que le chalumeau de préchauffage est un chalumeau autogène.

3. Procédé selon la revendication 1, caractérisé en ce que le chalumeau de préchauffage est un chalumeau à plasma.

4. Procédé selon la revendication 2, caractérisé en ce que le chalumeau de préchauffage comporte des flammes de chauffage disposées en rangées l'une derrière l'autre.

5. Procédé selon une des revendications 1 à 4, caractérisé en ce que le chalumeau de préchauffage est susceptible d'être bridé sur le boin.